# EUROPÄISCHE PATENTSCHRIFT

(11) **EP 0 522 237 B1**
(45) Veröffentlichungstag und Bekanntmachung des Hinweises auf die Patenterteilung: **09.08.1995**
(21) Anmeldenummer: 92103955.8
(22) Anmeldetag: 07.03.1992
(51) Int. Cl.: D06H 7/10

(54) **Schwenkzuführeinrichtung für Cordband-Schneidvorrichtungen**
Swinging device for feeding a cord strip to a cutter
Appareil de pivotement pour alimentation d'un ruban de corde pour une trancheuse

(30) Priorität: 01.07.1991 DE 4121688
(43) Veröffentlichungstag der Anmeldung: 13.01.1993
(73) Patentinhaber: Karl Eugen Fischer GmbH Maschinenfabrik, D-96220 Burgkunstadt (DE)
(72) Erfinder: Holzmann, Heinrich, W-8621 Hochstadt a. M. (DE); Hoffmann, Bernd, W-8622 Burgkunstadt (DE)
(74) Vertreter: Matschkur, Götz, Lindner Patent- und Rechtsanwälte

(56) Entgegenhaltungen:
- EP-A- 0 434 404
- DE-A- 1 905 397
- DE-B- 1 729 751
- GB-A- 1 183 431

## Beschreibung

Die Erfindung bezieht sich auf eine Schwenkzuführeinrichtung zum taktgesteuerten Zuführen von Cordband o. dgl. zu einer Schneidvorrichtung gemäß dem Oberbegriff des Hauptanspruchs.

Eine solche, intern bekannte Schwenkzuführeinrichtung dient dem Zweck, das Cordband von der Vorratsrolle der Schneidvorrichtung in einem variablen Winkel zuzuführen, so daß Schnitte unter verschiedenen Winkeln zur Längsrichtung des Cordbands möglich sind. Hierzu kann das Vorratsrollengestell auf einer Kreisbahn, deren Mittelpunkt sich etwa in der Ebene des Schneidmessers befindet, verfahren werden. Damit das noch unvulkanisierte Cordband, welches einerseits weich und verformbar und andererseits sehr klebrig ist und daher auf jeder Unterlage stark haftet, während des Verfahrens des Vorratsrollengestells nicht beschädigt wird, liegt dieses auf einer Vielzahl paralleler Förderbänder auf, welche mit dem Vorratsrollengestell verschwenkt werden. Das obere Trum dieser Förderbänder läuft unabhängig vom Schwenkwinkel der Zuführeinrichtung bis knapp vor das Schneidmesser der Schneidvorrichtung, wo sich die vorderen Umlenkrollen befinden. Je nach Schwenkwinkel der Zuführeinrichtung verändert sich deshalb die Länge des oberen Trums der Förderbänder, weshalb eine Bandlängenausgleichsvorrichtung sowie eine Bandspannvorrichtung für jedes Förderband notwendig ist. Damit das Cordband bei einer Verschwenkung nicht quer zu seiner Längsrichtung gedehnt oder gestaucht wird, sind die Tragelemente der vorderen Umlenkrollen bis auf höchstens eine Ausnahme an je einem Führungsschlitten drehbar angelenkt, wobei die Führungsschlitten entlang einer zum Schneidmesser parallelen Führung des Schneidtisches verschiebbar sind. Durch eine geeignete Verstellung dieser Führungsschlitten wird die Breite des Cordbands unabhängig vom Schwenkwinkel der Zuführeinrichtung konstant gehalten. Diese Verstellung erfolgt bei den bekannten Vorrichtungen mittels elektrisch betätigter Stellglieder und ist daher sehr aufwendig, vor allem auch deshalb, weil der Verschiebeweg eine trigonometrische Funktion des Schwenkwinkels ist.

Es ist daher die Aufgabe der Erfindung, eine Vorrichtung zu schaffen, welche auf möglichst unkomplizierte Art bei einer Verschwenkung der Zuführeinrichtung die Einhaltung bestimmter Abstände der Förderbänder zueinander gewährleistet.

Die Erfindung löst diese Aufgabe bei einer Schwenkzuführeinrichtung zum taktgesteuerten Zuführen von Cordband o. dgl. zu einer Schneidvorrichtung der im Oberbegriff des Hauptanspruchs bezeichneten Art dadurch, daß die schwenkbaren Tragelemente der vorderen Umlenkrollen in Längsrichtung der Förderbänder verlaufende Ansätze aufweisen, welche mit den Ansätzen benachbarter Elemente durch zu ihren Längsachsen parallele Linearführungen parallel verschiebbar verbunden sind, wobei wenigstens ein Ansatz mit der Bandlängenausgleichsvorrichtung verbunden ist. Durch die Linearführungen ist einerseits die parallele Ausrichtung und andererseits ein konstanter Abstand der Förderbänder untereinander stets gewährleistet. Gleichzeitig sind Relativbewegungen in Längsrichtung der Förderbänder möglich, so daß die beim Verschwenken der Zuführeinrichtung auftretende Längenänderung der oberen Trume keine Probleme verursacht. Die durch die Position des Vorratsrollengestells vorgegebenen Winkelstellung der Förderbänder gegenüber dem Schneidmesser wird durch das oder die mit der Bandlängenausgleichsvorrichtung verbundenen Ansätze auf deren Rollentragelemente direkt übertragen und mittels der Parallelführungen auch auf alle anderen, mit der Bandlängenausgleichsvorrichtung nicht direkt verbundenen Rollentragelemente. Hierbei stellen sich die Führungsschlitten auf der zum Schneidmesser parallelen Führung des Schneidtisches ohne zusätzlichen Antrieb auf die richtigen Positionen ein. Somit sind weitere Stell- und Steuereinrichtungen überflüssig. Dadurch reduziert sich die Störanfälligkeit der Schwenkzuführeinrichtung erheblich.

Es liegt im Rahmen der Erfindung, daß die Ansätze als Teleskoprohre ausgebildet und mit dem Vorratsrollengestell verbunden sind. Bei dieser Ausführungsform wird der Drehwinkel jedes Rollentragelements direkt durch das mit diesem sowie mit der Bandlängenausgleichsvorrichtung verbundene Teleskoprohr vorgegeben. Die Funktion der Parallelführungen ist auf die Einhaltung des Abstandes zwischen den Förderbändern beschränkt, während deren parallele Ausrichtung sich durch die Verbindung der Teleskoprohre mit der Bandlängenausgleichsvorrichtung ergibt.

Da die Ausführung der Ansätze als Teleskoprohre sehr aufwendig ist, sieht die Erfindung weiterhin vor, daß genau ein Ansatz, vorzugsweise der eines mittleren Förderbandes, an der Bandlängenausgleichsvorrichtung starr befestigt ist. Dieser Ansatz ist nicht als Teleskoprohr ausgebildet, sondern weist eine fixe Länge auf. Er überträgt den Drehwinkel des Vorratsrollengestells auf das zugehörende Rollentragelement sowie über die Parallelführungen auch auf sämtliche anderen Ansätze und die mit diesen verbundenen Rollentragelemente. Um den bei einer Verschwenkung auftretenden maximalen Verschiebeweg eines Anlenkpunktes möglichst klein zu halten, wird für den starr mit der Bandlängenausgleichsvorrichtung verbundenen Ansatz günstigerweise der einem mittleren Förderband zugeordnete Ansatz verwendet, denn der Verschiebeweg eines äußeren Anlenkpunktes gegenüber dem mittleren Rollentragelement ist nur halb so groß wie sein Verschiebeweg bezüglich des gegenüberliegenden, äußeren Anlenkpunktes.

Ein funktionsnotwendiges Merkmal der Erfindung ist, daß dasjenige Tragelement, dessen Ansatz an der Bandlängenausgleichsvorrichtung starr befestigt ist, am Schneidtisch um den Mittelpunkt der Schwenkbahn des Vorratsrollengestells drehbar angelenkt ist. Da der Anlenkpunkt unabhängig vom Schwenkwinkel in einer Flucht mit den übrigen, in gleichem Abstand zum Schneidmesser angeordneten Anlenkpunkten sein soll, kommt wegen der starren Verbindung mit dem auf einer Kreisbahn verfahrbaren Vorratsrollengestell ausschließlich der Mittelpunkt dieser Kreisbahn in Frage.

Eine vorteilhafte Weiterbildung der Erfindung besteht darin, daß die Tragelemente, deren Ansätze nicht an der Bandlängenausgleichsvorrichtung befestigt sind, an längs einer zum Schneidmesser parallelen Führung an der Schneidtischplatte verschiebbaren Führungsschlitten, um eine senkrechte Achse schwenkbar, angelenkt sind. Diese Maßnahme sorgt einerseits für einen gleichbleibenden Abstand aller Anlenkpunkte zum Schneidmesser und schafft andererseits den zur Konstanthaltung des Abstands der Förderbänder untereinander notwendigen Freiheitsgrad.

Die Erfindung zeichnet sich weiterhin dadurch aus, daß die Ansätze zweier benachbarter, die vorderen Umlenkrollen tragenden Elemente durch je eine Linearführung aneinander geführt sind. Um auch bei sehr spitzen Winkeln zwischen der Cordbandlängsachse und dem Schneidmesser ein Verklemmen der Führungsschlitten mit der zum Schneidmesser parallelen Führung auszuschließen, sind erhöhte Anforderungen an die Präzision der Parallelführungen zwischen den Ansätzen zu stellen.

Im Hinblick auf die Leichtgängigkeit der Führungsschlitten, wozu auch leichtgängige Parallelführungen zwischen den Ansätzen beitragen, sieht die Erfindung rollengelagerte Linearführungen vor.

Schließlich entspricht es der Lehre der Erfindung, daß die Linearführungen eine solche Länge aufweisen, welche auch bei maximaler Verschwenkung der Schwenkzuführeinrichtung ein leichtgängiges Gleiten der Führungsschlitten auf der zum Schneidmesser parallelen Führung gewährleistet. Zu diesem Zweck muß die Länge der Führungen dahingehend optimiert werden, daß einerseits die Präzision der Parallelführung den Anforderungen entspricht und andererseits die mit zunehmender Führungslänge anwachsende Reibungskraft noch toleriert werden kann. Bei Verwendung von reibungsvermindernden Rollen kann dieser Aspekt jedoch vernachlässigt werden.

Weitere Merkmale, Einzelheiten und Vorteile der Erfindung ergeben sich aus der folgenden Beschreibung einer bevorzugten Ausführungsform sowie anhand der Zeichnung. Hierbei zeigen:
- Fig. 1: eine Seitenansicht einer Cordband-Schneidvorrichtung samt Schwenkzuführeinrichtung,
- Fig. 2: einen Schnitt durch die Fig. 1 entlang der Linie II - II,
- Fig. 3: das in Fig. 1 durch den Kreis III hervorgehobene Detail,
- Fig. 4: einen Schnitt durch die Fig. 3 entlang der Linie IV - IV,
- Fig. 5: einen Schnitt durch die Fig. 3 entlang der Linie V - V,
- Fig. 6: das in Fig. 5 durch den Kreis VI hervorgehobene Detail,

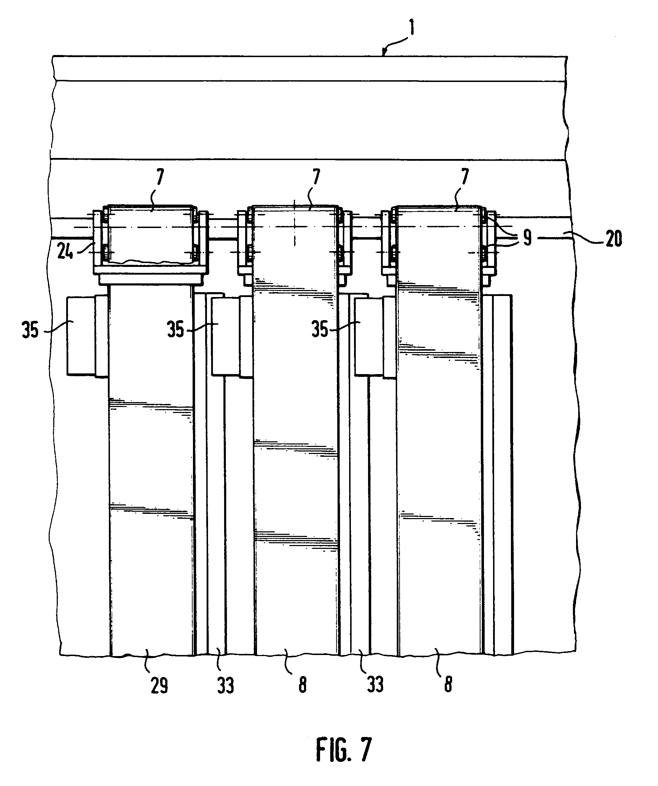

- Fig. 7: eine Draufsicht auf die Fig. 3, teilweise geschnitten und
- Fig. 8 u. 9: zwei Draufsichten auf die Fig. 1 in unterschiedlicher Schwenkstellung der Zuführeinrichtung, wobei die Förderbänder, die Auflageplatte und der Zuführtisch weggelassen sind.

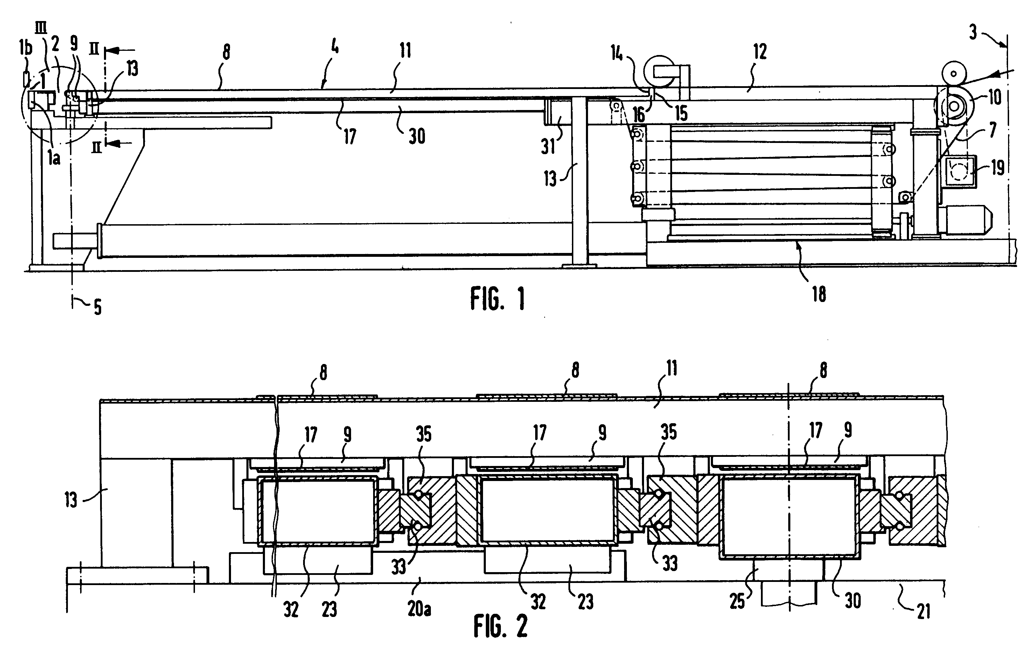

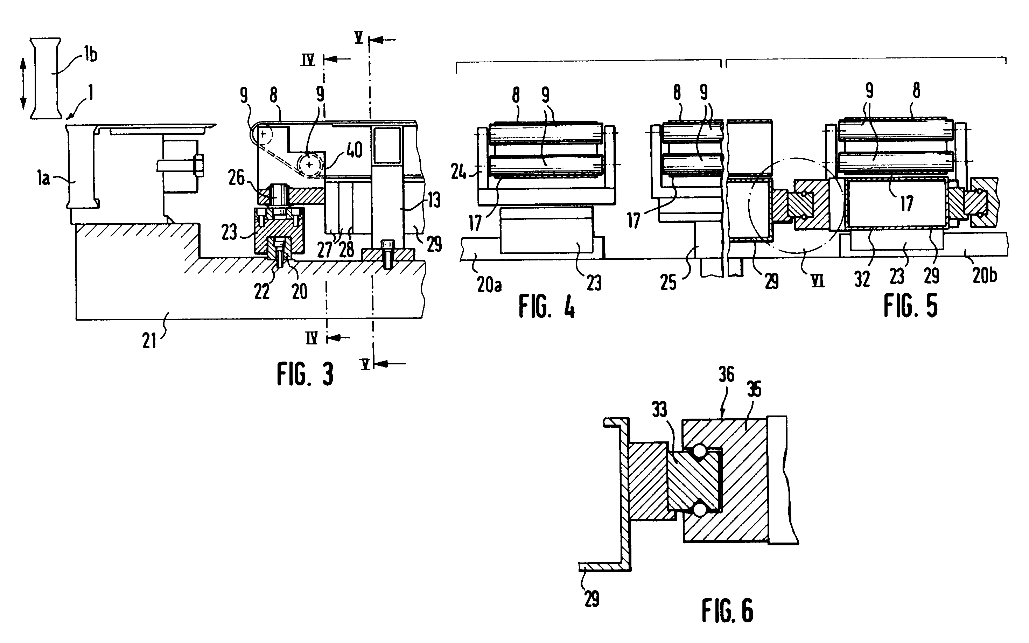

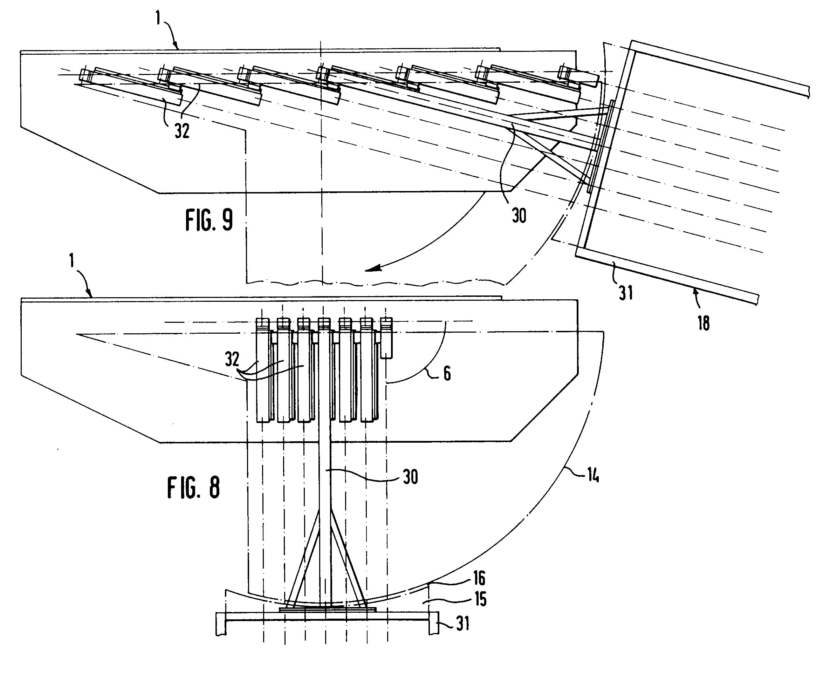

Fig. 1 zeigt in der Seitenansicht schematisch eine ortsfeste Schneidvorrichtung 1 mit einem starren Untermesser 1a und einem beweglichen Obermesser 1b. Vom beweglichen Vorratsrollengestell 3 wird das Cordband über die Zuführeinrichtung 4 zur Schneidvorrichtung 1 geschoben. Das Vorratsrollengestell 3 kann mit der starr verbundenen Bandlängenausgleichsvorrichtung 18 der Zuführeinrichtung 4 auf einer nicht dargestellten, kreisförmigen Fahrbahn um die senkrechte Achse 5 verfahren werden, wobei der Winkel 6 gegenüber der Schnittebene zwischen etwa 15° und 90° variiert werden kann. Die Zuführeinrichtung 4 ist aus einer Vielzahl paralleler Förderbänder 7 gebildet, deren obere Trume 8 zwischen vorderen Umlenkrollen 9 und hinteren Umlenkrollen 10 verlaufen und im vorderen Bereich von einer ortsfest mit der Schneidvorrichtung 1 verbundenen Aufflageplatte 11 des Zuführtisches 13 im hinteren Bereich von einem mit der Bandlängenausgleichsvorrichtung 18 starr verbundenen und mit dieser um die Auflageplatte 11 schwenkbaren, äußeren Auflagetisch 12 unterstützt werden. Die Auflageplatte 11 weist eine kreisförmige Außenkante 14 auf, an die die ebenfalls kreisförmige Innenkante 15 des äußeren Auflagetischs 12 unter Bildung eines sehr geringen Spalts 16 anschließt. Die unteren Trume 17 der Förderbänder 7 verlaufen unterhalb der Auflageplatte 11 zur Bandlängenausgleichsvorrichtung 18 zurück. Die Förderbänder 7 werden von einem Motor 19 mit gleicher Geschwindigkeit angetrieben. In den Fig. 3 bis 5 ist der Bereich der vorderen Umlenkrollen 9 vergrößert dargestellt. Parallel zur Ebene der Schneidmesser 1a, 1b ist eine etwa in der Mitte ihrer Gesamtlänge unterbrochene Führungsschiene 20 an der Schneidtischplatte (21) mittels versenkter Schrauben 22 befestigt. Auf der Führungsschiene 20 sind Führungsschlitten 23 verfahrbar, deren Anzahl gleich der um 1 verminderten Gesamtzahl der Förderbänder 7 ist. Diese Führungsschlitten 23 verteilen sich zu gleichen Anteilen auf die beiden Hälften 20a, 20b der Führungsschiene 20. Jedem Förderband 7 sind zwei vordere Umlenkrollen 9 zugeordnet. Diese sind in einem Tragelement 24 gelagert, welches etwa U-förmigen Querschnitt aufweist. Das die Umlenkrollen 9 des mittleren Förderbands 7 tragende Element 24 ist mittels eines Zapfens 25 direkt an der Schneidtischhplatte 21, um die senkrechte, durch den Mittelpunkt der kreisförmigen Fahrbahn des Vorratsrollengestells 3 verlaufende Achse 5 schwenkbar, angelenkt. Sämtliche anderen Tragelemente 24 sind mit Bolzen 26 an je einem Führungsschlitten 23, ebenfalls um senkrechte Achsen drehbar, angeordnet. Mit der der Schneidvorrichtung 1 abgewandten Seite 40 der Tragelemente 24 ist über Abschlußplatten 27 die Stirnseite 28 je eines Vierkantrohrs 29 starr verbunden. Jedes Vierkantrohr 29 verläuft unterhalb des unteren Trums 17 des zugehörigen Förderbands 7 parallel zu diesem. Wie in den Fig. 8 und 9 zu sehen ist, erstreckt sich das Vierkantrohr 29 des mittels des Zapfens 25 direkt an der Schneidtischplatte 21 angelenkten Tragelements 24 als Führungsstrebe 30 bis zum Rahmen 31 der Bandlängenausgleichsvorrichtung 18, wo es starr befestigt ist. Alle anderen Vierkantrohre 29 sind dagegen als frei endende Ansätze 32 ausgeführt. Zwischen je zwei benachbarten Vierkantrohren 29 befindet sich eine rollengelagerte Linearführung 36. In den Fig. 8 und 9 ist die Wirkungsweise der erfindungsgemäßen Zuführeinrichtung 4 veranschaulicht. Bei einem Schwenkwinkel von etwa 90° sind die Führungsschlitten 23 auf minimale Abstände zusammengeschoben. Die oberen Trume 8 sämtlicher Förderbänder 7 weisen etwa gleiche Länge auf. Wird nun durch Verfahren des Vorratsrollengestells 3 der Schwenkwinkel 6 reduziert, teilt sich diese Bewegung über die Führungsstrebe 30 dem an der Schneidtischplatte 21 direkt angelenkten Tragelement 24 mit. Die in diesem gelagerten, vorderen Umlenkrollen 9 bleiben dadurch im rechten Winkel zum mittleren Förderband 7. Gleichzeitig überträgt sich der Schwenkwinkel 6 über die Linearführungen 36 auf die mit den restlichen Tragelementen 24 starr verbundenen Ansätze 32. Dies bewirkt neben einer entsprechenden Drehung dieser Tragelemente 24 gegenüber den betreffenden Führungsschlitten 23 eine Verschiebung der Führungsschlitten 23 längs der Führungsschiene 20. Bei einer Verringerung des Winkels 6 wandern die Führungsschlitten 23 nach außen, wird der Schwenkwinkel 6 dagegen vergrößert, schieben sich die Führungsschlitten 23 in Richtung auf das mittlere, direkt an der Schneidtischplatte 21 ausschließlich drehbar angelenkte Tragelement 24 zusammen. Hierbei wird die Linearverschiebung der Führungsschlitten 23 vor allem durch Drehmomente innerhalb der Linearführungen 36 hervorgerufen. Der Hebelarm entspricht dabei dem Abstand der Führungsschlitten 23 zum überlappenden Teil 35 der benachbarten Linearführungen 36, so daß bei kleinen Schwenkwinkeln 6, wenn dieser Abstand relativ groß ist, von den Linearführungen 36 große Drehmomente aufgebracht werden müssen. Da das Drehmoment proportional zum Produkt aus der konstanten Länge des überlappenden Teils 35 der Linearführung 36 und der auf die Gleitflächen wirkenden Normalkraft ist, nimmt die Klemmkraft und damit die Gefahr des Verklemmens zu kleinen Schwenkwinkeln 6 hin zu. Diesem Effekt kann durch das Vorsehen von reibungsvermindernden Rollen wirksam begegnet werden. Um den Abstand des Vorratsrollengestells 3 zur Schneidvorrichtung 1 möglichst klein zu halten, kann die Länge des äußersten, bei einer Verringerung des Schwenkwinkels 6 auf die Bandlängenausgleichsvorrichtung zu wandernden Ansatzes 32 etwa auf die Länge des Führungselements 35 reduziert werden.

## Patentansprüche

1. Schwenkzuführeinrichtung zum taktgesteuerten Zuführen von Cordband o.dgl. zu einer Schneidvorrichtung (1) mit einer das auf einer Kreisbahn verfahrbare Vorratsrollengestell (3) mit dem Zuführtisch (13) verbindenden, um das vordere Ende schwenkbaren Auflagefläche für das Cordband, die durch eine Vielzahl paralleler Förderbänder (7) gebildet ist, welche jeweils ober- und unterhalb von Auflageplatte (11) und Auflagetisch (12) mit vorderen und hinteren Umlenkrollen (9, 10) sowie über je eine Bandlängenausgleichsvorrichtung (18) und Bandspannvorrichtung verlaufen, wobei die Umlenkrollen (10) am hinteren Ende an der starr am Vorratsrollengestell (3) befestigten Bandlängenausgleichsvorrichtung (18) und die Umlenkrollen (9) am vorderen Ende an Tragelementen (24) gelagert sind, welche am Zuführtisch (13) oder an längs einer zum Schneidmesser parallelen Führung (20) desselben verschiebbaren Führungsschlitten (23), um eine senkrechte Achse (25, 26) schwenkbar, angelenkt sind, dadurch gekennzeichnet, daß die schwenkbaren Tragelemente (24) der vorderen Umlenkrollen (9) in Längsrichtung der Förderbänder (7) verlaufende Ansätze (30, 32) aufweisen, welche mit den Ansätzen (30, 32) benachbarter Elemente durch zu ihren Längsachsen parallele, ineinandergreifende Führungen (36) gegeneinander parallelverschiebbar verbunden sind, wobei wenigstens ein Ansatz (30) mit der Bandlängenausgleichsvorrichtung (18) verbunden ist.

2. Schwenkzuführeinrichtung nach Anspruch 1, dadurch gekennzeichnet, daß die Ansätze als Teleskoprohre ausgebildet und mit dem Vorratsrollengestell verbunden sind.

3. Schwenkzuführeinrichtung nach Anspruch 1, dadurch gekennzeichnet, daß genau ein Ansatz (30), vorzugsweise der eines mittleren Förderbands (7), an der Bandlängenausgleichsvorrichtung (18) starr befestigt ist.

4. Schwenkzuführeinrichtung nach Anspruch 3, dadurch gekennzeichnet, daß dasjenige Tragelement (24), dessen Ansatz (30) an der Bandlängenausgleichsvorrichtung (18) starr befestigt ist, an der Schneidtischplatte (21) um den Mittelpunkt (5) der Schwenkbahn des Vorratsrollengestells (3) drehbar angelenkt ist.

5. Schwenkzuführeinrichtung nach Anspruch 4, dadurch gekennzeichnet, daß die Tragelemente (24), deren Ansätze (32) nicht an der Bandlängenausgleichsvorrichtung (18) befestigt sind, an längs einer zum Schneidmesser parallelen Führung (20) der Schneidtischplatte (21) verschiebbaren Führungsschlitten (23), um eine senkrechte Achse (26) schwenkbar, angelenkt sind.

6. Schwenkzuführeinrichtung nach einem der Ansprüche 1 bis 5, dadurch gekennzeichnet, daß die Ansätze (30, 32) zweier benachbarter, die vorderen Umlenkrollen (9) tragenden Elemente (24) durch je eine Linearführung (36) aneinander geführt sind.

7. Schwenkzuführeinrichtung nach Anspruch 6, gekennzeichnet durch eine rollengelagerte Linearführung (36).

8. Schwenkzuführeinrichtung nach einem der Ansprüche 1 bis 7, dadurch gekennzeichnet, daß die Linearführung (36) eine solche Länge aufweist, welche auch bei maximaler Verschwenkung der Schwenkzuführeinrichtung (3, 4) ein leichtgängiges Gleiten der Führungsschlitten (23) auf der zum Schneidmesser parallelen Führung (20) gewährleistet.

## Claims

1. Swinging device for feeding cord strip or the like in a timed manner to a cutter (1), having a support face for the cord strip, which is pivotable about the front end and which connects the supply roll frame (3) movable on a circular path to the feed table (13), the cord strip consisting of a plurality of parallel conveyor belts (7) each running over and under a support plate (11) and a support table (12) having front and rear deflection pulleys (9, 10) and via a belt length-compensating device (18) and a belt tension device, wherein the deflection pulleys (10) are mounted on the rear end of the belt length- compensating device (18) fixed rigidly to the supply roll frame (3) and the deflection rolls (9) at the front end are mounted on support elements (24), which are coupled to the feed table (13) or to guide carriages (23) displaceable along a guide (20) parallel to the cutting blade so as to pivot about a vertical shaft (25, 26), characterised in that the pivotable support elements (24) of the front deflection pulleys (9) have projections (30, 32) extending in the longitudinal direction of the conveyor belts (7) and connected to the projections (30, 32) of adjacent elements so as to slide parallel to one another by mutually engaging guides (36) parallel to their longitudinal axes, at least one projection (30) being connected to the belt length-compensating device (18).

2. Swinging device according to claim 1, characterised in that the projections are formed as telescopic tubes and are connected to the supply roll frame.

3. Swinging device according to claim 1, characterised in that precisely one projection (30), preferably that of a middle conveyor belt (7), is rigidly connected to the belt length-compensating device (18).

4. Swinging device according to claim 3, characterised in that the support element (24) whose projection (30) is rigidly connected to the belt length-compensating device (18) is rotatably coupled to the cutting table plate (21) about the centre (5) of the pivotal path of the supply roll frame (3).

5. Swinging device according to claim 4, characterised in that the support elements (24) whose projections (32) are not fixed to the belt length-compensating device (18) are coupled to guide carriages (23) displaceable along a guide (20) of the cutting table plate (21) parallel to the cutting blade so as to pivot about a vertical shaft (26).

6. Swinging device according to one of claims 1 to 5, characterised in that the projections (30, 32) of two adjacent elements (24) supporting the front deflection pulleys (9) are guided with respect to one another by a respective linear guide (36).

7. Swinging device according to claim 6, characterised by a roll-mounted linear guide (36).

8. Swinging device according to one of claims 1 to 7, characterised in that the linear guide (36) has a length such as to ensure easy sliding of the guide carriages (23) on the guide (20) parallel to the cutting blade even at maximum pivoting of the swinging guide device (3, 4).

## Revendications

1. Dispositif d'alimentation pivotant destiné à amener, sous commande cadencée, une nappe de corde ou analogue à un dispositif de coupe (1), et comprenant une surface d'appui pour la nappe de corde, qui relie à la table d'alimentation (13) le bâti de rouleaux d'alimentation (3) pouvant être déplacé sur une trajectoire circulaire, et peut pivoter autour de l'extrémité avant, et qui est formée par un grand nombre de bandes de transport (7) parallèles, circulant chacune au-dessus et au-dessous d'un plateau d'appui (11) et d'une table d'appui (12) à l'aide de rouleaux de renvoi avant et arrière (9, 10), et passant chacune sur un dispositif de compensation de longueur de bande (18) et un dispositif de tension de bande, les rouleaux de renvoi (10), situés à l'extrémité arrière, étant montés sur le dispositif de compensation de longueur de bande (18) fixé rigidement au bâti de support de bobines d'alimentation (3), et les rouleaux de renvoi (9), situés à l'extrémité avant, étant montés sur des éléments de support (24) qui sont articulés, de manière à pouvoir pivoter autour d'un axe vertical (25, 26), sur la table d'alimentation (13) ou sur des chariots de guidage (23) pouvant coulisser le long d'un guidage (20) de cette table d'alimentation, parallèle à la lame de coupe, caractérisé en ce que les éléments de support (24) pivotants des rouleaux de renvoi avant (9) comportent des prolongements (30, 32), qui s'étendent dans la direction longitudinale des bandes de transport (7), et qui sont reliés aux prolongements (30, 32) d'éléments voisins de manière à pouvoir coulisser parallèlement les uns par rapport aux autres, au moyen de guidages (36) parallèles à leurs axes longitudinaux et s'engageant les uns dans les autres, au moins un prolongement (30) étant relié au dispositif de compensation de longueur de bande (18).

2. Dispositif d'alimentation pivotant selon la revendication 1, caractérisé en ce que les prolongements sont réalisés sous la forme de tubes télescopiques et sont reliés au bâti de rouleaux d'alimentation.

3. Dispositif d'alimentation pivotant selon la revendication 1, caractérisé en ce qu'un seul prolongement (30), de préférence celui d'une bande de transport centrale (7), est fixé rigidement au dispositif de compensation de longueur de bande (18).

4. Dispositif d'alimentation pivotant selon la revendication 3, caractérisé en ce que l'élément de support (24) dont le prolongement (30) est fixé rigidement au dispositif de compensation de longueur de bande (18), est articulé sur le plateau de la table de coupe (21), de manière à pouvoir tourner autour du centre (5) de la trajectoire de pivotement du bâti de rouleaux d'alimentation (3).

5. Dispositif d'alimentation pivotant selon la revendication 4, caractérisé en ce que les éléments de support (24) dont les prolongements (32) ne sont pas fixés au dispositif de compensation de longueur de bande (18), sont articulés, de manière à pouvoir pivoter autour d'un axe vertical (26), sur des chariots de guidage (23) déplaçables le long d'un guidage (20) du plateau de la table de coupe (21), parallèle à la lame de coupe.

6. Dispositif d'alimentation pivotant selon l'une des revendications 1 à 5, caractérisé en ce que les prolongements (30, 32) de deux éléments (24) voisins, portant les rouleaux de renvoi avant (9), sont guidés l'un sur l'autre par un guidage linéaire (36) respectif.

7. Dispositif d'alimentation pivotant selon la revendication 6, caractérisé par un guidage linéaire à galets (36).

8. Dispositif d'alimentation pivotant selon l'une des revendications 1 à 7, caractérisé en ce que le guidage linéaire (36) présente une longueur telle, que celle-ci garantisse un glissement aisé des chariots de guidage (23) sur le guidage (20) parallèle à la lame de coupe, même dans le cas d'un pivotement maximal du dispositif d'alimentation pivotant (3, 4).
